# EUROPÄISCHE PATENTSCHRIFT

(11) **EP 3 507 163 B1**
(45) Veröffentlichungstag und Bekanntmachung des Hinweises auf die Patenterteilung: **14.07.2021**
(21) Anmeldenummer: 17791960.2
(22) Anmeldetag: 10.10.2017
(51) Int. Cl.: B61D 27/00

(54) **KLIMAKANAL UND DAMIT AUSGESTATTETES FAHRZEUG ZUR PERSONENBEFÖRDERUNG**
AIR-CONDITIONING DUCT AND PASSENGER TRANSPORT VEHICLE EQUIPPED THEREWITH
CONDUIT DE CLIMATISATION ET VÉHICULE DE TRANSPORT DE PASSAGERS ÉQUIPÉ DE CELUI-CI

(30) Priorität: 31.10.2016 DE 102016221410
(43) Veröffentlichungstag der Anmeldung: 10.07.2019
(73) Patentinhaber: Siemens Mobility GmbH, 81739 München (DE)
(72) Erfinder: CIFTCI, Behcet, 46117 Oberhausen (DE); KASAP, Irfan, 44653 Herne (DE)
(86) Internationale Anmeldenummer: PCT/EP2017/075816
(87) Internationale Veröffentlichungsnummer: WO 2018/077609

(56) Entgegenhaltungen:
- AT-B- 395 136
- BE-A- 682 917
- DE-B- 1 530 050
- DE-C- 647 059

## Beschreibung

Die Erfindung bezieht sich auf einen Klimakanal zur Verlegung als sich in Längsrichtung eines Fahrzeugs zur Personenbeförderung erstreckender Bodenklimakanal, der über seine Längserstreckung eine Reihe von Luftaustrittsöffnungen zur Realisierung eines vorgegebenen Luftaustrittsmusters aufweist, nach dem Oberbegriff von Anspruch 1.

Ein solcher Klimakanal ist beispielsweise aus der AT 395 136 B bekannt. Bei dem dort vorgestellten Schienenfahrzeug weisen jeweils vorgesehene Klimakanalsegmente jedoch maximal eine Luftaustrittsöffnung auf, so dass ein vorgegebenes Luftaustrittsmuster allenfalls sehr grob realisierbar ist.

Ähnliche Klimakanäle sind beispielsweise von modernen Schienenfahrzeugen her bekannt, bei denen hohe Anforderungen an einen Fahrgastkomfort zu erfüllen sind. Diese Anforderungen, die beispielsweise die DIN-EN 14750 für den Nahverkehr oder die DIN-EN 13129 für den Fernverkehr beschreiben, zeichnen sich durch sehr spezielle Randbedingungen für eine Klimatisierung aus. Diese Normen geben für wechselnde Betriebsbedingungen an verschiedenen Punkten im Fahrgastinnenraum Werte für eine Temperatur und eine Luftbewegungsgeschwindigkeit vor.

Während in einem Kühlfall überwiegend von einer Decke des Fahrgastinnenraums her ausgeblasen wird, bei der Störungen durch Inneneinrichtungen des Fahrgastinnenraums nicht gegeben sind, wird konfektionierte Zuluft für den Fahrgastinnenraum in einem Heizfall im Fußraum der Fahrgäste ausgeblasen. Daher besitzen Schienenfahrzeuge sowohl für den Nah- als auch den Fernverkehr für die Verteilung von Warmluft seitlichen in Bodennähe angebrachte Klimakanäle.

Diese Klimakanäle müssen wegen unterschiedlicher Sitzlandschaften und Befestigungsmöglichkeiten für jedes einzelne Fahrzeugprojekt separat in einer Klimakammer eingestellt werden. Dort vorgenommene Messungen bestimmen das vorgegebene Luftaustrittsmuster des Bodenklimakanals. Eine Einstellung der Zuluftverteilung wird durch entlang des Klimakanals ortsabhängige Erhöhung eines Strömungswiderstands für die aus dem Klimakanal austretende Zuluft erreicht.

Die Umsetzung des mit Hilfe der Messungen in der Klimakammer aufgefundenen Luftaustrittsmusters für einen Klimakanal für ein bestimmtes Fahrzeugprojekt erfolgt derzeit in der Weise, dass auf einer unteren Seite des Bodenklimakanals vorgesehene Luftaustrittsöffnungen verschlossen werden. Durch mühsames Schließen eines Teils der Luftaustrittsöffnungen entlang des Klimakanals wird in der Klimakammer das Ausströmverhalten des Klimakanals so lange verändert, bis der gewünschte, den Normen entsprechende Klimakomfort erreicht wird. Das Schließen und Öffnen der Luftaustrittsöffnungen erfordert sehr hohes Geschick, da die Zugänglichkeit der einzelnen Luftaustrittsöffnungen beispielsweise durch Fahrzeugsitze nur eingeschränkt möglich ist.

Bei der Umsetzung des vorgegebenen Luftaustrittsmusters muss ein Monteur in der Serienfertigung der Schienenfahrzeuge sehr genau arbeiten, da eine fehlerhafte Zuordnung oder Fehlinterpretation eine Energieverteilung im Fahrgastinnenraum negativ beeinflussen kann. Zudem ist dieser Prozess sehr zeitintensiv, da der Monteur die Luftaustrittsöffnungen einzeln abzählen muss, um zu identifizieren, welche Luftaustrittsöffnungen geöffnet bleiben und welche zu verschließen sind.

Ausgehend hiervon liegt der Erfindung die Aufgabe zugrunde, einen Klimakanal der eingangs genannten Art derart weiterzuentwickeln, dass die Montage in der Serienfertigung bei Fahrzeugen zur Personenbeförderung vereinfacht ist, und ein mit einem solchen Klimakanal ausgestattetes Fahrzeug zur Personenbeförderung anzugeben.

Diese Aufgabe wird durch einen Klimakanal mit den Merkmalen des Anspruchs 1 gelöst.

Danach zeichnet sich der eingangs angegebene Klimakanal dadurch aus, dass die Luftaustrittsöffnungen der Verkleidungselemente als im montierten Zustand des Klimakanalsegments vertikal verlaufende, in einer vorgegebenen Teilung nebeneinander angeordnete Langlöcher ausgebildet sind, und jedes Verkleidungselement ein Teil-Luftaustrittsmuster in Form von verschlossenen und offenen Luftaustrittsöffnungen aufweist.

Das Vorsehen der Verkleidungselemente, die im montierten Zustand in den Klimakanal integriert sind, ermöglicht es, die Einstellbarkeit in der Klimakammer deutlich zu vereinfachen, da die Verkleidungselemente einfacher zu entfernen sind und entsprechend modifiziert werden können, was ihr jeweiliges Teil-Luftaustrittsmuster angeht.

Die Hauptkörper der Klimakanalsegmente können insgesamt in einem Stück vorliegen, wobei dann mehrere, in Längsrichtung des Klimakanals verlaufende, langgestreckte Ausnehmungen unter Einhaltung von Abständen zueinander hintereinander liegen. Ebenso ist es möglich, dass jedem Hauptkörper eines Klimakanalsegmentes lediglich eine einzelne Ausnehmung zugeordnet ist. Dann sind die einzelnen Hauptkörper zum Zusammensetzen des Klimakanals mit ihren Stirnseiten aneinander anzuschließen. Die Hauptkörper werden beispielsweise in konventioneller Art und Weise befestigt. Sie können bevorzugt durch ein Zwischenstück miteinander verbunden sein, das jeweils eine Steckverbindung mit unmittelbar angrenzenden Hauptkörpern eingeht und ggf. zusätzlich mit den Hauptkörpern verschraubt ist.

Zur Vereinfachung der Montage in der Serienfertigung werden sowohl die Hauptkörper der Klimakanalsegmente als auch die jeweiligen Verkleidungselemente passend gekennzeichnet.

Die Luftaustrittsöffnungen der Verkleidungselemente sind als vertikal verlaufende, in einer vorgegebenen Teilung nebeneinander angeordnete Langlöcher ausgebildet. In dieser Weise ergibt sich eine einfach herzustellende Ausführung zur Realisierung der Luftaustrittsöffnungen.

Jedes Verkleidungselement weist ein Teil-Luftaustrittsmuster in Form von verschlossenen und offenen Luftaustrittsöffnungen auf, wobei die verschlossenen Luftaustrittsöffnungen mittels Klebeband abgeklebt sein können.

Die Verkleidungselemente können hinsichtlich ihrer Teil-Luftaustrittsmuster vorgefertigt sein. In diesem Fall kann der Monteur anhand entsprechender Kennzeichnung der Hauptkörper der Klimakanalsegmente und der jeweils zugehörigen Verkleidungselemente das Luftaustrittsmuster über eine gesamte Länge der Klimakanals in einfacher Weise realisieren.

Die Verkleidungselemente können an den zugeordneten Hauptkörpern mittels Schraubverbindungen befestigt sein. Dies gestattet eine einfache Montage und der Demontage Verkleidungselemente an den Hauptkörpern.

Bevorzugt ist jedem Klimakanalsegment ein einzelnes Verkleidungssegment zugeordnet. Dies unterstützt eine aufwandsarme Montage der jeweils passenden Verkleidungselemente für ein bestimmtes Klimakanalsegment.

Die jeweilige Ausnehmung der Hauptkörper kann als Schlitz mit gleichförmiger Breite ausgeführt sein. Damit hat die Ausnehmung eine langgestreckte, rechtwinkelige Form. Somit wird auch das Verkleidungselement rechtwinkelig ausgeführt sein, so dass die zugeordnete Ausnehmung zuverlässig verkleidet ist. Insbesondere ist die Anbringung der Verkleidungselemente an den Hauptkörper so zu wählen, dass eine hohe Luftdichtigkeit im Bereich der Anschlussflächen vorliegt.

Die o.g. Aufgabe wird hinsichtlich des Fahrzeugs gelöst durch ein Fahrzeug mit den Merkmalen des Anspruchs 9. Dabei kann das Fahrzeug bevorzugt als Schienenfahrzeug ausgeführt sein, wobei der Klimakanal an unteren Rändern von Seitenwänden montiert ist.

Ein Ausführungsbeispiel der Erfindung wird nachfolgend unter Bezugnahme auf die Zeichnungen noch näher erläutert. Es zeigen:
- Figur 1: eine perspektivische, schematische auseinandergezogene Ansicht eines Klimakanalsegments zum Aufbau eines Klimakanals,
- Figur 2: eine perspektivische, schematische Ansicht des Klimakanalsegments von Figur 1,
- Figur 3: eine perspektivische, schematische Ansicht eines vierteiligen Klimakanals in einem Ausgangszustand,
- Figur 4: eine perspektivische, schematische Ansicht des Klimakanals von Figur 3 mit abgenommenen Verkleidungselementen,
- Figur 5: eine perspektivische, schematische Ansicht der Verkleidungselemente des Klimakanals von Figur 3, ausgestattet mit einem Luftaustrittsmuster und
- Figur 6: eine perspektivische, schematische Ansicht des Klimakanals von Figur 3, ausgestattet mit den Verkleidungselementen von Figur 5.

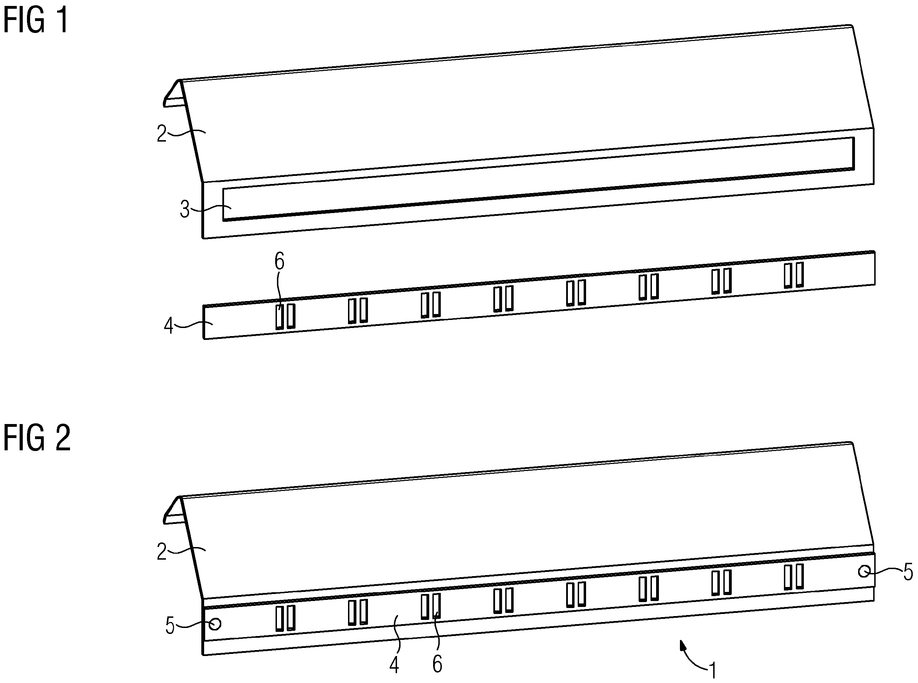

Die Figuren 1 und 2 zeigen ein Klimakanalsegment 1 zum Aufbau eines Bodenklimakanals für ein Schienenfahrzeug als Beispiel für ein Fahrzeug zur Personenbeförderung. Das Klimakanalsegment 1 umfasst einen Hauptkörper 2, der einen etwa U-förmigen Querschnitt aufweist. Einer der Schenkel der U-Form des Hauptkörpers 2 ist mit einer langgestreckten Ausnehmung 3 ausgestattet, die im montierten Zustand des Klimakanalsegments 1 in Längsrichtung des Fahrzeugs verläuft. Die Ausnehmung 3 ist rechtwinkelig ausgebildet und erstreckt sich nahezu über eine gesamte Länge des Klimakanalsegments 1 derart, dass an deren Enden lediglich schmale Stege verbleiben.

Die Ausnehmung 3 wird mit Hilfe eines Verkleidungselements 4 abgedeckt. Wie Figur 2 entnehmbar ist, wird das Verkleidungselement 4 auf die mit der Ausnehmung 3 versehene Seite des Hauptkörpers 2 aufgelegt und mit Hilfe von Schraubverbindungen 5 an dem Hauptkörper 2 lösbar befestigt.

Das Verkleidungselement 4 ist mit einer Reihe gleichartiger, vertikal verlaufender Langlöcher 6 ausgestattet. Die Langlöcher 6 sind mit vorgegebener Teilung über die Länge des Verkleidungselementes 4 verteilt. In dem Beispiel von Figur 1 sind jeweils Paare von Langlöchern 6 freigehalten, während dazwischen liegende Langlöcher abgedeckt sind, um ein gewünschtes Luftaustrittsmuster zu realisieren.

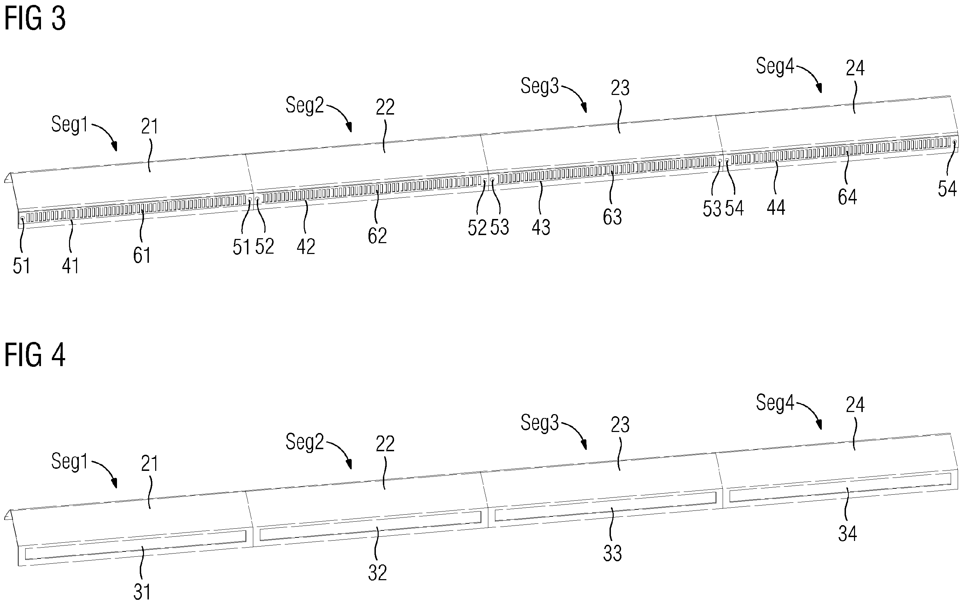

Figur 3 zeigt einen im vorliegenden Ausführungsbeispiel vierteiligen Klimabodenkanal, der aus vier Klimakanalsegmenten Seg1, Seg2, Seg3, Seg4 zusammengesetzt ist, die in ihrer Ausführung jeweils dem Klimakanalsegment 1 von Fig. 2 entsprechen. Jedes Klimakanalsegment Seg1, Seg2, Seg3, Seg4 zeigt einen Hauptkörper 21, 22, 23, 24 und ein Verkleidungselement 41, 42, 43, 44. In der Montagesituation des Klimakanals nach Figur 3 ist noch kein vorgegebenes Luftaustrittsmuster, das sich aus den Teil-Luftaustrittsmustern der Verkleidungselemente 41, 42, 43, 44 zusammensetzt, verwirklicht. Anders ausgedrückt, sämtliche vertikalen Langlöcher 61, 62, 63, 64, welche die Luftaustrittsöffnungen für den Klimakanal bilden, sind offen. Wie bei dem Verkleidungselement 4 von Figur 2 sind die Langlöcher 61, 62, 63, 64 in einer vorgegebenen Teilung nebeneinander angeordnet.

In dem Ausbauzustand des Klimakanals nach Figur 4 sind die Verkleidungselemente 41, 42, 43, 44 von den Hauptkörpern 21, 22, 23, 24 abgenommen, und zwar durch Lösen der jeweiligen Schraubverbindungen 51, 52, 53 , 54. Damit sind langgestreckte, in Längsrichtung des Klimakanals verlaufende Ausnehmungen 31, 32, 33, 34 sichtbar, die in ihrer Form und Gestaltung der Ausnehmung 3, von Figur 1 entsprechen.

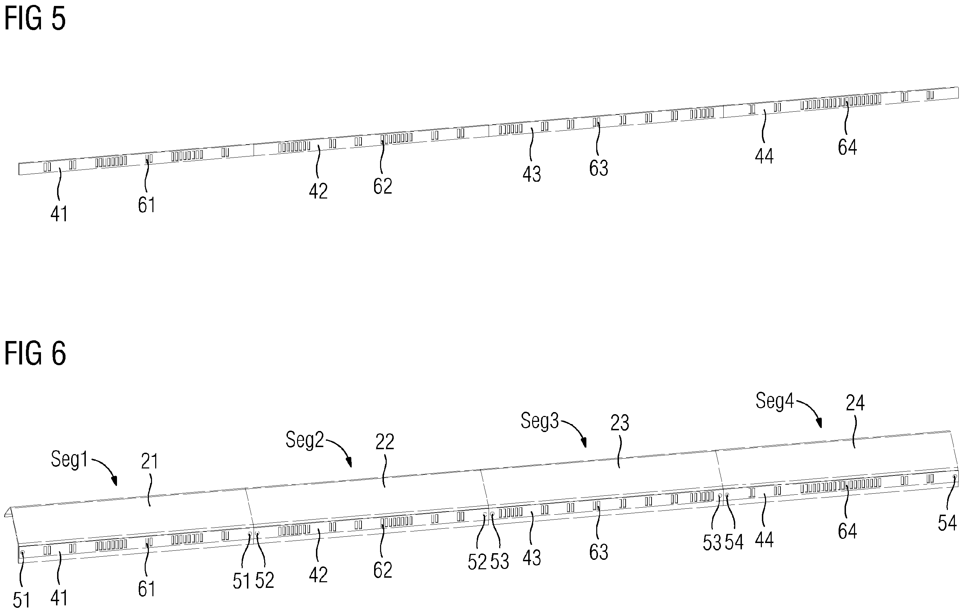

Figur 5 zeigt das Ergebnis von Messungen in einer Klimakammer für das Luftaustrittsmuster, das für ein bestimmtes Fahrzeugprojekteinzuhalten ist. Die aus Blech gerfertigten Verkleidungselemente 41, 42, 43, 44 sind nunmehr mit zugehörigen Teil-Luftaustrittsmustern versehen, die zwischen den einzelnen Klimakanalsegmenten Seg1, Seg2, Seg3, Seg4 variieren. Die in Figur 5 abgedeckten Langlöcher 61, 62, 63, 64 sind mit Hilfe von Klebeband verschlossen.

Während der Ermittlung des geeigneten Luftaustrittsmusters für den Klimakanal insgesamt können die Verkleidungselemente 41, 42, 43, 44 von den Hauptkörpern 21, 22, 23, 24 abgenommen und entsprechend modifiziert werden. Das jeweilige Ergebnis kann für eine spätere Serienfertigung in einem Belegungsplan niedergelegt werden. Dieser Belegungsplan ist dann bei den einzelnen Fahrzeugen aus der Serienfertigung von dem Monteur entsprechend umzusetzen.

Figur 6 zeigt den fertig montierten Klimakanal, bei dem die mit den zutreffenden Teil-Luftaustrittsmustern versehenen Verkleidungselemente 41, 42, 43, 44 wieder an ihren zugehörigen Hauptkörpern 21, 22, 23, 23, 24 angebracht sind. Zur einfachen Zuordnung der Verkleidungselemente 41, 42, 43, 44 zu den Klimakanalsegmenten Seg1, Seg2, Seg3, Seg4 sind die Hauptkörper 21, 22, 23, 24 mit geeigneten Markierungen versehen, die mit Markierungen der Verkleidungselemente 41, 42, 43, 44 übereinstimmen bzw. eine eindeutige Zuordnung erlauben.

Der so montierte Klimakanal ist beispielsweise in einem Schienenfahrzeug an unteren Rändern von dessen Seitenwänden montiert und dient zum Ausblasen von Warmluft in einem Heizbetrieb einer Klimaanlage, mit der das Schienenfahrzeug ausgestattet ist.

## Patentansprüche

1. Klimakanal zur Verlegung als sich in Längsrichtung eines Fahrzeugs zur Personenbeförderung erstreckender Bodenklimakanal, der über seine Längserstreckung eine Reihe von Luftaustrittsöffnungen zur Realisierung eines vorgegebenen Luftaustrittsmusters aufweist, wobei der Klimakanal wenigstens teilweise aus aneinander anschließenden Klimakanalsegmenten (1, Seg1, Seg2, Seg3, Seg4) aufgebaut ist, die jeweils einen Hauptkörper (2, 21, 22, 23, 24), der wenigstens eine in seiner Längsrichtung verlaufende, langgestreckte Ausnehmung (3, 31, 32, 33, 34) aufweist, sowie ein an die wenigstens eine Ausnehmung (3, 31, 32, 33, 34) angepasstes Verkleidungselement (4, 41, 42, 43, 44) aufweisen, das mit dem Hauptkörper (2, 21, 22, 23, 24) lösbar verbindbar ist und über seine Längserstreckung einen Teil der Reihe der Luftaustrittsöffnungen aufweist,
**dadurch gekennzeichnet, dass**
die Luftaustrittsöffnungen der Verkleidungselemente (4, 41, 42, 43, 44) als im montierten Zustand des Klimakanalsegments vertikal verlaufende, in einer vorgegebenen Teilung nebeneinander angeordnete Langlöcher (6, 61, 62, 63, 64) ausgebildet sind, und jedes Verkleidungselement (4, 41, 42, 43, 44) ein Teil-Luftaustrittsmuster in Form von verschlossenen und offenen Luftaustrittsöffnungen aufweist.

2. Klimakanal nach Anspruch 1,
**dadurch gekennzeichnet, dass**
die verschlossenen Luftaustrittsöffnungen mittels Klebeband abgeklebt sind.

3. Klimakanal nach einem der Ansprüche 1 oder 2,
**dadurch gekennzeichnet, dass**
die Verkleidungselemente (4, 41, 42, 43, 44) hinsichtlich ihres Teil-Luftaustrittsmuster vorgefertigt sind.

4. Klimakanal nach einem der Ansprüche 1 bis 3,
**dadurch gekennzeichnet, dass**
die Verkleidungselemente (4, 41, 42, 43, 44) an den zugeordneten Hauptkörpern Hauptkörper (2, 21, 22, 23, 24) mittels Schraubverbindungen (5, 51, 52, 53, 54) befestigt sind.

5. Klimakanal nach einem der Ansprüche 1 bis 4,
**dadurch gekennzeichnet, dass**
jedem (1, Seg1, Seg2, Seg3, Seg4) ein einzelnes Verkleidungselement (4, 41, 42, 43, 44) zugeordnet ist.

6. Klimakanal nach einem der Ansprüche 1 bis 5,
**dadurch gekennzeichnet, dass**
die jeweilige Ausnehmung (3, 31, 32, 33, 34) der Hauptkörper (2, 21, 22, 23, 24) als Schlitz mit gleichförmiger Breite ausgeführt ist.

7. Fahrzeug zur Personenbeförderung, ausgestattet mit einem Klimakanal nach einem der Ansprüche 1 bis 6.

8. Fahrzeug nach Anspruch 7,
ausgeführt als Schienenfahrzeug, wobei der Klimakanal an unteren Rändern von Seitenwänden montiert ist.

## Claims

1. Air conditioning duct for laying as a floor air conditioning duct which extends in the longitudinal direction of a vehicle for passenger transport and, over its longitudinal extent, has a row of air outlet openings in order to realise a predefined air outlet pattern, the air conditioning duct being constructed at least partially from the air conditioning duct segments (1, Seg1, Seg2, Seg3, Seg4) which adjoin one another and in each case have a main body (2, 21, 22, 23, 24), which has at least one elongate recess (3, 31, 32, 33, 34) which runs in its longitudinal direction, and a trim element (4, 41, 42, 43, 44) which is adapted to the at least one recess (3, 31, 32, 33, 34), can be connected releasably to the main body (2, 21, 22, 23, 24), and has a part of the row of the air outlet openings over its longitudinal extent,
**characterized in that**
the air outlet openings of the trim elements (4, 41, 42, 43, 44) are configured as slots (6, 61, 62, 63, 64) which run vertically in the mounted state of the air conditioning duct segment and are arranged next to one another at a predefined spacing, and
each trim element (4, 41, 42, 43, 44) has a part air outlet pattern in the form of closed and open air outlet openings.

2. Air conditioning duct according to Claim 1,
**characterized in that**
the closed air outlet openings are masked by means of adhesive tape.

3. Air conditioning duct according to either of Claims 1 and 2,
**characterized in that**
the trim elements (4, 41, 42, 43, 44) are prefabricated with regard to their part air outlet pattern.

4. Air conditioning duct according to one of Claims 1 to 3,
**characterized in that**
the trim elements (4, 41, 42, 43, 44) are fastened to the associated main bodies (2, 21, 22, 23, 24) by means of screw connections (5, 51, 52, 53, 54).

5. Air conditioning duct according to one of Claims 1 to 4,
**characterized in that**
each (1, Seg1, Seg2, Seg3, Seg4) is assigned an individual trim element (4, 41, 42, 43, 44).

6. Air conditioning duct according to one of Claims 1 to 5,
**characterized in that**
the respective recess (3, 31, 32, 33, 34) of the main bodies (2, 21, 22, 23, 24) is configured as a slit with a homogeneous width.

7. Vehicle for passenger transport, equipped with an air conditioning duct according to one of Claims 1 to 6.

8. Vehicle according to Claim 7,
configured as a rail vehicle, the air conditioning duct being mounted on the lower edges of side walls.

## Revendications

1. Conduit de conditionnement d'air pour la pose comme conduit de conditionnement d'air d'un plancher s'étendant dans la direction longitudinale d'un véhicule de transport des passagers, qui a sur son étendue en longueur une série d'ouïes de sortie d'air pour la réalisation d'un motif de sortie d'air donné à l'avance, le conduit de conditionnement d'air étant constitué au moins en partie de segments (1, Seg1, Seg2, Seg3, Seg4) de conduit de conditionnement d'air se raccordant les uns aux autres, qui ont chacun un corps (2, 21, 22, 23, 24) principal qui a au moins un évidement (3, 31, 32, 33, 34) s'étendant en longueur et dans la direction longitudinale, ainsi qu'un élément (4, 41, 42, 43, 44) d'habillage adapté au au moins un évidement (3, 31, 32, 33, 34) s'étendant verticalement à l'état monté du segment de conduit de conditionnement et s'étendant verticalement à l'état monté qui peut être relié de manière amovible au corps (2, 21, 22, 23, 24) principal et qui a sur son étendue en longueur une partie de la série d'ouïes de sortie d'air,
**caractérisé en ce que**
les ouïes de sortie d'air des éléments (4, 41, 42, 43, 44) d'habillage sont constituées de boutonnières (6, 61, 62, 63, 64) s'étendant verticalement à l'état monté du segment de conduit de conditionnement et disposées les unes à côté des autres suivant un pas donné à l'avance et
chaque élément (4, 41, 42, 43, 44) d'habillage a un motif partiel de sortie d'air sous la forme d'ouïes de sortie d'air fermées et ouvertes.

2. Conduit de conditionnement d'air suivant la revendication 1,
**caractérisé en ce que**
les ouïes de sortie d'air fermées sont collées au moyen d'un ruban adhésif.

3. Conduit de conditionnement d'air suivant l'une des revendications 1 ou 2,
**caractérisé en ce que**
les éléments (4, 41, 42, 43, 44) d'habillage sont préfabriqués en ce qui concerne leur motif de sortie d'air partiel.

4. Conduit de conditionnement d'air suivant l'une des revendications 1 à 3,
**caractérisé en ce que**
les éléments (4, 41, 42, 43, 44) d'habillage sont fixés aux corps (2, 21, 22, 23, 24) principaux associés au moyen de vissages (5, 51, 52, 53, 54).

5. Conduit de conditionnement d'air suivant l'une des revendications 1 à 4,
**caractérisé en ce que**
un élément (4, 41, 42, 43, 44) d'habillage individuel est associé à chaque segment (1, Seg1, Seg2, Seg3, Seg4).

6. Conduit de conditionnement d'air suivant l'une des revendications 1 à 5,
**caractérisé en ce que**
l'évidement (3, 31, 32, 33, 34) respectif du corps (2, 21, 22, 23, 24) principal est réalisé en forme de fente de largeur uniforme.

7. Véhicule pour le transport des passagers, équipé d'un conduit de conditionnement d'air suivant l'une des revendications 1 à 6.

8. Véhicule suivant la revendication 7,
réalisé en véhicule ferroviaire, le conduit de conditionnement d'air étant monté sur des bords inférieurs de parois latérales.
